# EUROPEAN PATENT APPLICATION

(11) **EP 1 379 088 A2**
(43) Date of publication of application: **07.01.2004**
(21) Application number: 03014401.8
(22) Date of filing: 27.06.2003
(51) Int. Cl.: H04N 7/24

(54) **Facilitating storage and playback of streamed video on demand files**

(30) Priority: 02.07.2002 US 188610
(71) Applicant: Alcatel S.A., 75008 Paris (FR)
(72) Inventor: Bailey, Joshua C., Ohio, 43235 Columbus (US); Marks, Alan J., North Carolina, 27612 Raleigh (US)
(74) Representative: Dreiss, Fuhlendorf, Steimle & Becker

(57) **Abstract**

One embodiment of the disclosures made herein is a communication system including a Digital Subscriber Line Access Multiplexor (DSLAM) (105) capable of facilitating PVR functionality for a video file transmitted toward a subscriber data processing system (125) via the DSLAM (105). In accordance with such a communication system, a DSLAM line card (130) is coupled to a service provider managed (SPM) file storage module (140,145) and to a personal video recorder (PVR) card (135). The SPM file storage module (140,145) has a video file stored thereon. The DSLAM line card (130) is capable of providing multiplexing functionality for a plurality of digital subscriber lines and is capable of enabling the video file to be transmitted for reception by a subscriber data processing system (125) from the SPM file storage module (140,145). The PVR card (135) is capable of enabling the subscriber data processing system (125) to facilitate controlling at least one of stop functionality, pause functionality, forwarding functionality, reversing functionality, file storage functionality and file retrieval functionality.

## Description

### FIELD OF THE DISCLOSURE

The disclosures made herein relate generally to streaming video on demand and more particularly to facilitating storage and playback of streamed video on demand files.

### BACKGROUND

The introduction of streaming video on demand (VOD) over a communication network such as the Internet enables video files to be downloaded to a subscriber data processing system from a VOD management system (e.g. a video server) upon demand by a VOD subscriber. Presently, subscriber data processing systems (e.g. personal computer (PC), set-top box (STB), etc) are generally limited to providing streamed VOD file viewing functionality as the VOD file is being downloaded. However, as the demand for streaming VOD service grows and becomes more widespread, VOD subscribers will expect the ability to stop, pause, forward, rewind and even store streamed VOD files for later viewing. Such ability to download, stop, pause, forward, rewind and store streamed VOD files is hereinafter referred to as Personal Video Recorder (PVR) functionality.

Certain video content providers, such as movie studios, are opposed to storing streamed VOD files locally on a subscriber data processing system. A concern of many video content providers is that the ability to store streamed VOD files locally on a subscriber data processing system will contribute to unauthorized duplication of copyrighted video content. Regardless of security measures implemented to protect such copyrighted video content, there is always the possibility that such security measures will be circumvented for allowing such unauthorized duplication of copyrighted materials.

Therefore, facilitating personal video recorder functionality in a manner that overcomes limitations associated with conventional storage and playback functionality for streamed video files is useful.

### BRIEF DESCRIPTION OF THE DRAWING FIGURES

FIG. 1 is a block diagram view depicting a communication system capable of implementing personal video recorder (PVR) functionality in accordance with an embodiment of the disclosures made herein.

FIG. 2 is a block diagram depicting an embodiment of the PVR card depicted in FIG. 1, in conjunction with associated control and data connections.

Fig. 3 is a block diagram depicting an embodiment of a plurality of circuits of the communication system depicted in FIG. 1.

FIG. 4 is a flow diagram view depicting a method for implementing PVR functionality in accordance with an embodiment of the disclosures made herein.

### DETAILED DESCRIPTION OF THE DRAWING FIGURES

The disclosures made herein relate to providing personal video recorder (PVR) functionality for controlling the delivery a streamed video file via a Digital Subscriber Line Access Multiplexor (DSLAM) through which the video file is streamed. That is, the PVR functionality will reside in the DSLAM that Digital Subscriber Line (DSL) subscribers are served from. However, any storage and/or buffering of the video file required for enabling PVR functionality is facilitated at a service provider managed file storage module of a DSLAM through which the video file is streamed, rather than at a subscriber managed file storage module.

A DSL subscriber is able to control the flow of the video file via PVR functionality using an application that runs on the subscriber's data processing system (e.g. personal computer, set-top box, etc.) and that communicates with the DSLAM. Examples of such PVR functionality include stopping playback of a video file, re-starting playback, pausing playback, forwarding playback, reversing playback and storing the video file for later viewing.

By providing storage and/or buffering of the video file at a service provider managed file storage module rather than at a subscriber managed file storage module, PVR functionality may be provided in a manner that reduces the potential for file security measures to be compromised by parties receiving the streamed video file. Accordingly, video file content owners will be more forthcoming with offering video files for network streaming because the video files are not stored on a file storage module managed by the DSL subscriber. Furthermore, centralizing the hardware and software that enables PVR functionality allows service upgrades to be performed for groups of subscribers (e.g. DSL subscribers) rather than individual downloads to large numbers of subscriber data processing system.

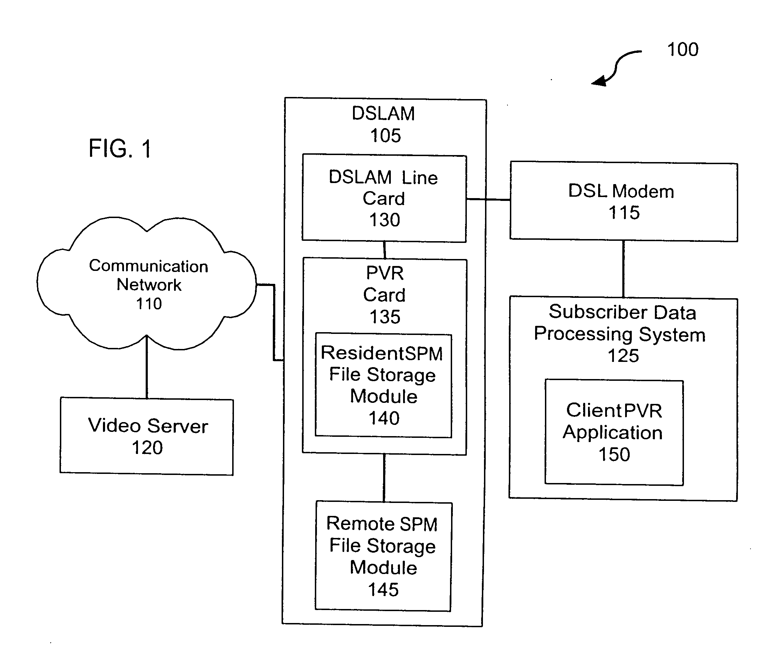

Turning now to the drawing figures, FIG. 1 depicts a communication system 100 comprising a plurality of apparatuses that enable personal video recorder (PVR) functionality to be implemented in accordance with an embodiment of the disclosures made herein. The communication system 100 includes a Digital Subscriber Line Access Multiplexor (DSLAM) 105 connected between a communication network 110 and a DSL modem 115. A video server 120 having a plurality of video files stored thereon is connected to the communication network 110 and a subscriber data processing system 125 is connected to the DSL modem 115 (i.e. a network interface device). Video files are capable of being transmitted (e.g. streamed) toward the subscriber data processing system 125 via the DSLAM 105.

The DSLAM 105 includes a DSLAM line card 130. It is contemplated herein that the DSLAM 105 may include one or more other DSLAM line cards. A PVR card 135 is connected to the DSLAM line card 130. It is contemplated herein that the PVR card 135 is capable of serving many (e.g. hundreds or thousands) of DSL subscribers. It is further contemplated herein that the DSLAM 105 may include one or more other PVR cards.

The PVR card 135 includes a resident service provider managed (SPM) file storage module 140. A remote SPM file storage module 145 is connected to the PVR card 130. Memory and buffers are examples of file storage modules. In at least one embodiment of the PVR card 140, the PVR card 140 includes system components (not shown in FIG. 1) such as memory, processor(s), resident server application(s), for example, for enabling PVR functionality to be implemented via the DSLAM.

Video files may be stored on one or both of the resident SPM file storage module 140 and the remote SPM file storage module 145. Furthermore, the DSLAM 105 may include only one of the resident SPM file storage module 140 and the remote SPM file storage module 145. A SPM file storage module is defined herein to mean a file storage module to which a DSL service provider has full access and to which the DSL service provider governs/limits the degree of access by a DSL subscriber.

The subscriber data processing system 125 includes a PVR client application 150 running thereon for enabling a control connection (e.g. a control tunnel on a digital subscriber line) between the subscriber data processing system 125 and the PVR card 135 to be established and maintained. While the control connection is in effect, any video file requested by the DSL subscriber is routed through the PVR card 135, thus enabling the DSL subscriber to control PVR functionality.

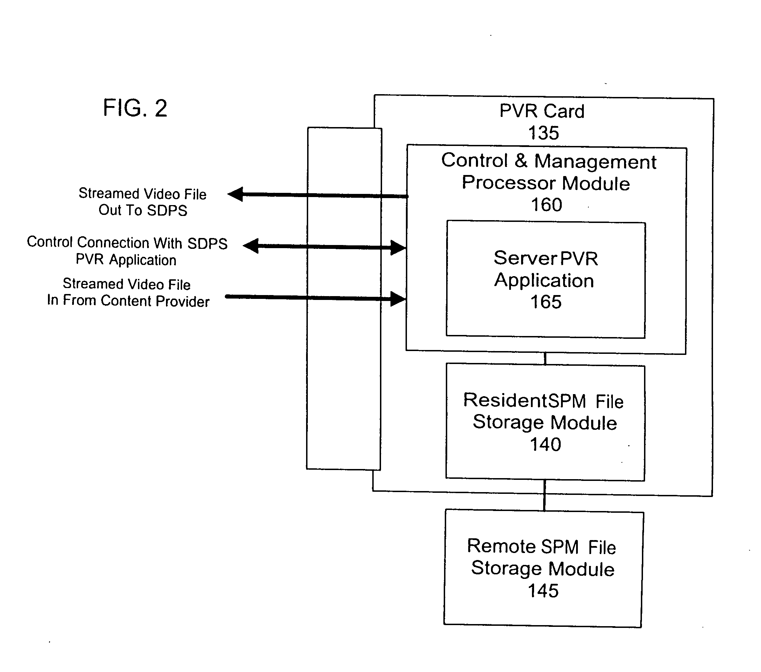

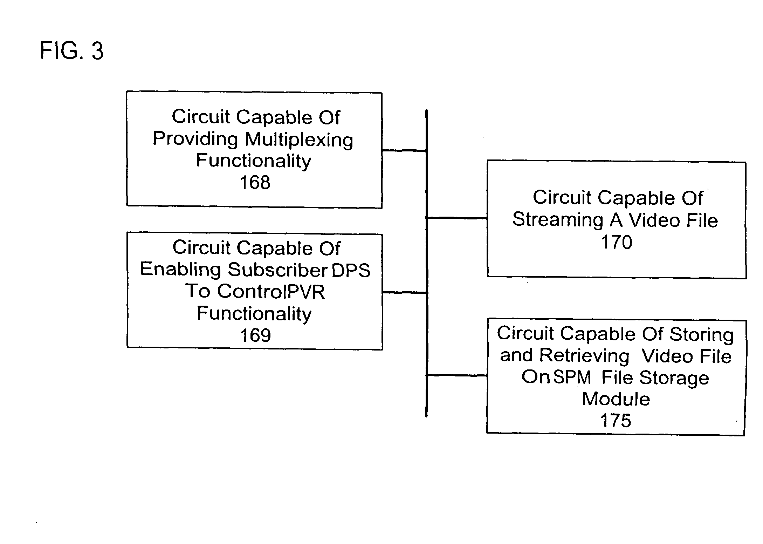

As depicted in FIG. 2, the PVR card 135 includes a control and management processor module 160 coupled to the resident SPM file storage module 140 and to the remote SPM file storage module 145. A PVR server application 165 is accessible by the control and management processor module 160. The PVR server application cooperates with the PVR client application 150 running on the subscriber data processing system 125, FIG. 1, for enabling a control connection (e.g. a control tunnel on a digital subscriber line) between the subscriber data processing system 125 and the PVR card 135 to be established and maintained.
The control and management processor module 160 facilitates the video file being forwarded toward the subscriber data processing system 125 via the DSLAM in accordance with a specified PVR functionality command received at the PVR card 135 from the subscriber data processing system 125. Examples of PVR functionality commands include a command for implementing stop functionality (i.e. a stop functionality command), a command for implementing pause functionality (i.e. a pause functionality command), a command for implementing forwarding functionality (i.e. a forwarding functionality command), a command for implementing reversing functionality (i.e. a reversing functionality command), a command for implementing file storage functionality (i.e. a file storage functionality command) and a command for implementing playback functionality (i.e. a playback functionality command.
As depicted in FIG. 3, the communication system 100 includes a plurality of circuits. A circuit 168 capable of providing multiplexing functionality for a plurality of digital subscriber lines is connected to a circuit 169 capable of enabling a subscriber data processing system to control personal video recorder (PVR) functionality and to a circuit 170 capable of streaming a video file for reception by the subscriber data processing system in accordance with a designated PVR functionality command. A circuit 175 capable of storing and retrieving the video file to and from, respectively, the service provider file storage module is also connected to the circuit 168 capable of providing multiplexing functionality. The circuit 169 capable of enabling a subscriber data processing system to control personal video recorder (PVR) functionality supports transmission of the video file from at least one of the SPM file storage modules (140, 145) for reception by the subscriber data processing system 125 in accordance with a specified PVR functionality command. It is contemplated herein that a DSLAM line card, a PVR card and a remote file storage module may jointly and/or individually comprise respective and appropriate portions all or part of such plurality of circuits (168-175). It is further contemplated herein that all of the plurality of circuits (168-175) may be interconnected.

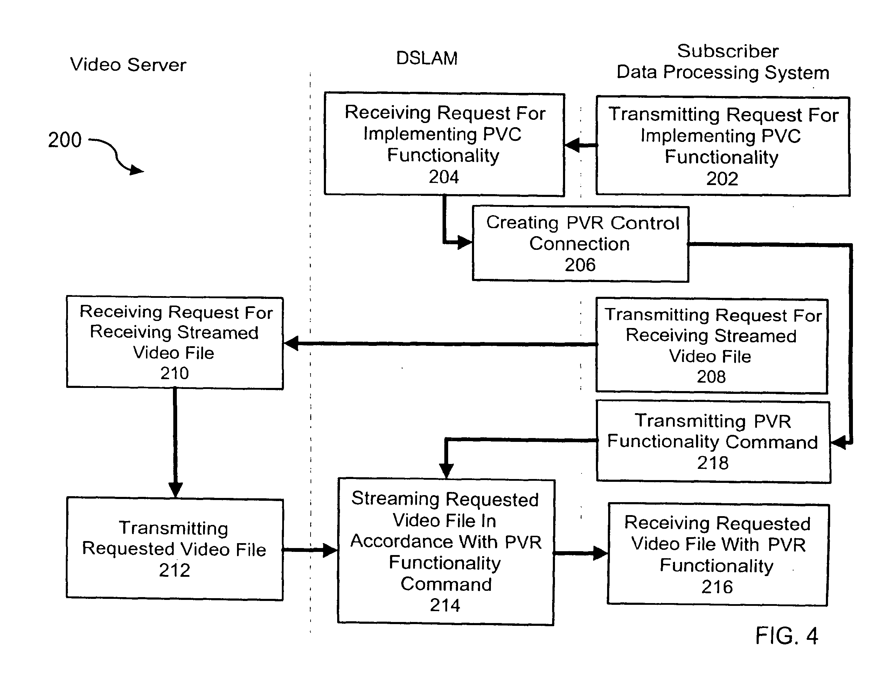

FIG. 4 depicts a method for implementing personal video recorder (PVR) functionality in accordance with an embodiment of the disclosures made herein. An operation 202 is performed at a subscriber data processing system for transmitting a request for implementing PVR functionality. In response to performing an operation 204 at a Digital Subscriber Line Access Multiplexor (DSLAM) for receiving the request for implementing the request, an operation 206 is performed for creating a PVR control connection between the DSLAM and the subscriber data processing system. In at least one embodiment, the operation 206 for creating the PVR control connection is performed jointly by the DSLAM and the subscriber data processing system.
In one embodiment of the operation 206 for creating the PVR control connection, the request for implementing PVR functionality includes a subscriber identifier (e.g. user name) and a subscriber passcode. A PVR card of the DSLAM verifies the subscriber identifier and passcode, thereafter notifying the subscriber data processing system of a successful or denied verification.

After creating the PVR control connection, an operation 208 is performed at the subscriber data processing system for transmitting a request for receiving a streamed video file (i.e. the requested video file). In response to performing an operation 210 at a video server for receiving the request for receiving the requested video file, an operation 212 is performed at the video server for transmitting the video file toward the subscriber data processing system via the DSLAM. In response to performing the operation 212 for transmitting the video file toward the subscriber data processing system, an operation 214 is performed by the DSLAM for streaming the requested video file to the subscriber data processing system and an operation 216 is performed by the subscriber data processing system for receiving the requested video file. In response to the control connection being created, an operation 218 is capable of being performed at the subscriber data processing system for transmitting a PVR functionality command for reception by the DSLAM. In response to the DSLAM receiving the PVR functionality command, the DSLAM facilitates delivery of the requested video file in accordance with the specified PVR functionality command. For example, PVR functionality such as forwarding, reversing, pausing, storing, playing back or the like may be implemented.

A specified PVR functionality command may require that the requested video file be stored at the DSLAM to facilitate subsequent delivery. For example, during playback of the requested video at the subscriber data processing system, the subscriber may request that delivery of the requested video file be paused. In such case, the video server continues to transmit the requested video file toward the subscriber data processing system via the DSLAM. In support of PVR functionality, at least a portion of the requested video file is stored at a service provider managed (SPM) file storage module of the DSLAM during the period while the pause functionality command is in effect. Storing all or part of the video file is defined herein to include buffering all or part of the video file.

At some point in time after the pause functionality command is requested and implemented, a different PVR functionality command (i.e. a newly issued PVR functionality command) may be transmitted from the subscriber data processing system for reception by the DSLAM. Some PVR functionality commands will require that the video file be retrieved from the SPM file storage module for permitting delivery of the video file in accordance with the newly issued PVR functionality command. For example, when the newly issued PVR functionality command requests playback of the video file, the video file is retrieved from the SPM file storage module of the DSLAM and is streamed for reception by the subscriber data processing system. It is contemplated herein that a first portion of the requested video file may be being stored on the SPM file storage module at the same time that a second portion of the requested video file is being retrieved from the SPM file storage module for playback.

Referring now to data processor programs in accordance with an embodiment of the disclosures made herein, a first data processor program controls at least a portion of the operations associated with facilitating PVR functionality at a DSLAM and a second data processor program controls at least a portion of the operations associated with facilitating PVR functionality at a subscriber data processor system. A server application is an example of the first data processor program and a client application is an example of the second data processor program. Accordingly, the first and the second data processor programs control at least a portion of the operations necessary to properly facilitate PVR functionality. The term data processor program is defined herein to refer to computer software, data processor algorithms or any other type of instruction code capable of controlling operations associated with a data processor.

The first and the second data processor programs are processible by a data processor at the DSLAM and at the subscriber data processing system, respectively. The first and the second data processor programs may be resident on a respective data processing module or may be accessible by a respective data processing module from an apparatus such as a diskette, a compact disk, a network storage device, a component of a communication system or other suitable apparatus. A data processor program accessible from an apparatus by a data processor is defined herein as a data processor program product.

It is contemplated herein that the data processor program product may comprise more than one data processor programs accessible from respective apparatuses. It is further contemplated herein that each one of a plurality of data processor programs may be accessed by a different respective one of a plurality of data processors. For example, a first data processor and a second data processor may access a first data processor program and a second data processor program, respectively, from a first apparatus and a second apparatus, respectively.

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice the invention. It is to be understood that other suitable embodiments may be utilized and that logical, mechanical, chemical and electrical changes may be made without departing from the spirit or scope of the invention. For example, functional blocks shown in the figures could be further combined or divided in any manner without departing from the spirit or scope of the invention. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. An apparatus, comprising:
a circuit capable of providing multiplexing functionality for a plurality of digital subscriber lines; and
a circuit capable of enabling a subscriber data processing system to facilitates controlling personal video recorder (PVR) functionality for permitting transmission of the video file from a service provider managed file storage module for reception by the subscriber data processing system in accordance with a designated PVR functionality command.

2. The apparatus of claim 1, further comprising:
a circuit capable of streaming the video file for reception by the subscriber data processing system in accordance with the designated PVR functionality command.

3. The apparatus of claim 1 wherein said PVR functionality includes at least one of stop functionality, pause functionality, forwarding functionality, reversing functionality, and file storage functionality to be performed.

4. The apparatus of claim 1 wherein said PVR functionality includes file retrieval functionality for retrieving the video file from a service provide managed file storage module.

5. The apparatus of claim 1, further comprising:
a circuit capable of storing and retrieving the video file on and from, respectively, the service provider file storage module.

6. The apparatus of claim 1 wherein the service provider managed file storage module resides on a personal video recorder card.

7. The apparatus of claim 1 wherein the service provider managed file storage module is remote from and coupled to a personal video recorder card.

8. The apparatus of claim 1 wherein the circuit capable of enabling the subscriber data processing system to facilitate controlling PVR functionality includes a personal video recorder card.

9. The apparatus of claim 1 wherein:
the circuit capable of providing multiplexing functionality is a DSLAM line card; and
the circuit capable of enabling a subscriber data processing system to facilitate controlling personal video recorder functionality is a personal video recorder card electrically coupled to the DSLAM line card.

10. A communication system, comprising:
a service provider managed file, storage module having a video file stored thereon;
a Digital Subscriber Line Access Multiplexor (DSLAM) line card coupled to the service provider managed file storage module, capable of providing multiplexing functionality for a plurality of digital subscriber lines and capable of enabling the video file to be transmitted for reception by a subscriber data processing system from the service provider managed file storage module; and
a personal video recorder card coupled to the DSLAM line card and capable of enabling the subscriber data processing system to facilitate controlling at least one of stop functionality, pause functionality, forwarding functionality, reversing functionality, file storage functionality and file retrieval functionality.
